# EUROPEAN PATENT SPECIFICATION

(11) **EP 0 654 212 B1**
(45) Date of publication and mention of the grant of the patent: **13.06.2001**
(21) Application number: 94118147.1
(22) Date of filing: 17.11.1994
(51) Int. Cl.: A01G 1/06

(54) **Apparatus for Grafting Seedlings**
Apparat zum Propfen von Sämlingen
Appareil pour greffer de jeunes plantes

(30) Priority: 22.11.1993 JP 29192293; 20.04.1994 JP 10589294
(43) Date of publication of application: 24.05.1995
(73) Proprietor: YANMAR AGRICULTURAL EQUIPMENT Co., Ltd., Osaka-shi, Osaka-fu (JP)
(72) Inventor: Buno, Setsuo, c/o Yanmar Agricult. Equipm. Co.,Ltd, Osaka-Shi, Osaka-Fu (JP); Yamada, Hisaya, c/o Yanmar Agricult.Equipm.Co.Ltd., Osaka-Shi, Osaka-Fu (JP); Uchida, Kiyoshi, c/o Yanmar Agricult.Equipm.Co.Ltd, Osaka-Shi, Osaka-Fu (JP); Koga, Haruo, c/o Yanmar Agricult. Equipm. Co., Ltd, Osaka-Shi, Osaka-Fu (JP); Takemura, Akira, c/o Yanmar Agricult.Equipm.Co.Ltd, Osaka-Shi, Osaka-Fu (JP); Takahashi, Akira, c/o Yanmar Agricultural Equipt., Osaka-Shi, Osaka-Fu (JP); Ueyama, Masanao, c/o Showa Precision Machinery, Amagasaki-Shi, Hyogo-Ken 661 (JP); Anbe, Yoshinori, c/o Showa Precision Machinery, Amagasaki-Shi, Hyogo-Ken 661 (JP)
(74) Representative: Lorenz, Eduard

(56) References cited:
- EP-A- 0 454 848
- FR-A- 2 541 562
- FR-A- 2 547 978

## Description

The present invention relates to an apparatus for grafting seedlings wherein scion seedlings and root stock seedlings are cut to joint the upper portions of the scion seedlings and the lower portions of the root stock seedlings simultaneously.

As the prior grafting apparatus wherein scion seedlings and root stock seedlings are cut to joint the upper portions of the scion seedlings and the lower portions of the root stock seedlings, apparatus as disclosed in Japanese Patent Application Laid-Open Publications Nos. 2-107125, 4-187029 and 4-304817 are known.

However, in these prior apparatuses, one scion seedling and one root stock seedling are jointed by a clip sequentially, and thus, it is impossible to graft a plurality of seedlings simultaneously.

Further, in the apparatus disclosed in Japanese Patent Application Laid-Open Publication No. 4-304817, a scion seedling carrying line and a root stock seedling carrying line are disposed parallel to each other, and between the downstream ends of these carrying lines, grasping means of scion and root stock seedlings, a seedling cutting mechanism and a seedling jointing mechanism are disposed, and further, a grafted seedling carrying line is located in a direction perpendicular to those two lines. Furthermore, in the apparatus disclosed in Japanese Patent Application Laid-Open Publication No. 4-187029, a scion seedling carrying line and a root stock seedling carrying line are disposed parallel to each other, and between the downstream ends of these carrying lines, grasping means of scion and root stock seedlings, a seedling cutting mechanism, a seedling jointing mechanism and a securing mechanism are disposed, and further, a grafted seedling carrying line is located in a direction parallel to those two lines at a position downstream of these mechanisms.

Therefore, there is a problem that an unnecessary space exists between the scion seedling carrying line and the root stock seedling carrying line, and thus, the entire apparatus becomes too large.

From EP-A-0 454 848 an apparatus for grafting seedlings is known which enables grafting a plurality of seedlings simultaneously and thus avoids the drawback of the grafting apparatus of the above cited prior art. The apparatus for grafting seedlings includes scion seedling carrying means, root stock seedling carrying means disposed parallel to the former, a seedling grasping and moving mechanism having upper and lower grasping means for grasping the upper and lower portions of scion and root stock seedlings simultaneously, means for moving the grasping means vertically, and in a direction perpendicular to the seedling carrying direction, a seedling cutting mechanism and a seedling jointing mechanism. Since scion seedlings and root stock seedlings are cut below (scion seedlings) or above (root stock seedlings) upper and lower grasping means only one end of the seedlings is grasped before cutting the stem. Therefore, the stem of the seedling may bend as the seedling is cut. If the stem bends it is not possible to ensure good correspondence between the angle of the cut with respect to the longitudinal axis of the stem and the angle of the cutter with respect to the vertical.

It is therefore an object of the present invention to provide an apparatus for grafting seedlings which allows better control of the angle of cut with respect to the longitudinal axis of the stem.

The above and other objects of the present invention can be accomplished by an apparatus for grafting seedlings including scion seedling carrying means and root stock seedling carrying means disposed parallel to the scion seedling carrying means, said apparatus further comprising a seedling grasping and moving mechanism for picking scion seedlings and root stock seedlings from the scion seedling carrying means and the root stock seedling carrying means to move them to a predetermined position, the seedling grasping and moving mechanism having upper seedling grasping means for grasping the upper portions of scion seedlings and root stock seedlings simultaneously, lower seedling grasping means for grasping the lower portions of scion seedlings and root stock seedlings simultaneously, means for moving the upper and lower seedling grasping means vertically, and means for moving the upper and lower seedling grasping means in a direction perpendicular to the seedling carrying direction, whereby the upper seedling grasping means and the lower seedling grasping means are movable independently of each other, a seedling cutting mechanism for cutting the scion and root stock seedlings grasped by the upper and lower seedling grasping means simultaneously between the portions grasped by said upper and lower seedling grasping means, and a seedling jointing mechanism for jointing the upper portions of the scion seedlings and the lower portions of the root stock seedlings each cut by the seedling cutting mechanism simultaneously.

The independent movability of the upper and lower grasping means allows the stem to be cut between the upper and lower grasped portions, and thus improves control of the angle of cut with respect to the longitudinal axis of the stem.

In a preferred aspect of the present invention, the apparatus further includes grafted seedling carrying means disposed parallel to the root stock seedling carrying means.

In another preferred aspect of the present invention, the seedling jointing mechanism is positioned on the locus along which the upper and lower seedling grasping means are moved.

In another preferred aspect of the present invention, each of the scion seedling carrying means, the root stock seedling carrying means and the grafted seedling carrying means is provided with a means for raising and lowering them separately.

In a further preferred aspect of the present invention, each of the scion seedling carrying means and the root stock seedling carrying means is provided with a sensor for sensing the height of the scion and root stock seedlings carried by the carrying means, each of the means provided on the scion seedling carrying means and the root stock seedling carrying means is arranged to raise and lower them automatically on the basis of the result sensed by the sensors.

In a yet further preferred aspect of the present invention, the apparatus further includes a pressure plate for assisting to release the grasping of the upper portions of the root stock seedlings grasped by the upper seedling grasping means during the release.

In a still further preferred aspect of the present invention, the apparatus further includes a sensor for sensing to release the grasping of the upper portions of the root stock seedlings grasped by the upper seedling grasping means during the release, and the apparatus is arranged to be stopped when the release fails.

In a yet further preferred aspect of the present invention, each of the scion seedling carrying means and the root stock seedling carrying means is provided with a seedling posture adjustment means adapted to hold the seedling substantially vertically during the grasping of the seedling by the upper and lower grasping means.

In a still further preferred aspect of the present invention, the seedling cutting mechanism includes seedling grasping hands for preventing the seedling from tottering during the cutting.

In a yet further preferred aspect of the present invention, the seedling cutting mechanism further includes nozzles for injecting fluid toward cutters.

In a still further preferred aspect of the present invention, the seedling jointing mechanism is arranged to joint the upper portion of the scion seedling and the lower portion of the root stock seedling by a clip.

In a yet further preferred aspect of the present invention, the seedling jointing mechanism includes a seedling press member for preventing the seedling from tottering during the jointing of the seedlings by the clip.

In a still further preferred aspect of the present invention, the seedling jointing mechanism further includes a clip supporting member for supporting the leading end of the clip before the seedlings are jointed by the clip.

The above and other objects and features of the present invention will become apparent from the following description made with reference to the accompanying drawings.

### BRIEF DESCRIPTION OF THE DRAWINGS

Figure 1 is a schematic front view of an apparatus for grafting seedlings which is an embodiment of the present invention.

Figures 2A and 2B show schematic plan views of an apparatus for grafting seedlings, Figure 2A showing the general construction of the apparatus and Figure 2B showing the seedling grasping and moving mechanism mounted on the frame.

Figure 3 is a side view of the raising and lowering means.

Figure 4 is a front view of the raising and lowering means.

Figure 5 is a side view of the seedling grasping and moving mechanism and the seedling cutting mechanism.

Figure 6 is a plan view of the seedling grasping and moving mechanism and the seedling cutting mechanism.

Figure 7 is a front view of the seedling grasping and moving mechanism.

Figure 8 is a perspective view of the lower grasping hand.

Figures 9 shows nozzles for injecting fluid such as pressurized air toward pressure plates and cutters mounted on the seedling grasping and moving mechanism.

Figure 10 is a plan view of the seedling posture adjustment means.

Figure 11 is a side view of the seedling posture adjustment means.

Figure 12 is a detailed view of the seedling pulling plates.

Figure 13 is a detailed perspective view of the seedling cutting mechanism.

Figure 14 is a sectional view of the seedling cutting mechanism.

Figure 15 is a side view of the seedling jointing mechanism.

Figure 16 is a front view of the seedling jointing mechanism.

Figure 17A shows the condition the clip is charged to the clip holder, Figure 17B showing the condition of just before the seedling is grasped by the clip and Figure 17C showing the condition the seedling is grasped by the clip.

Figure 18A is a cross sectional view of a clip holder and Figures 18B and 18C are views of a clip supporting member.

Figure 19 is a perspective view of a second embodiment of an actuator for grasping hands.

Figure 20 is a view showing a pneumatic circuit for controlling the actuator for grasping hands.

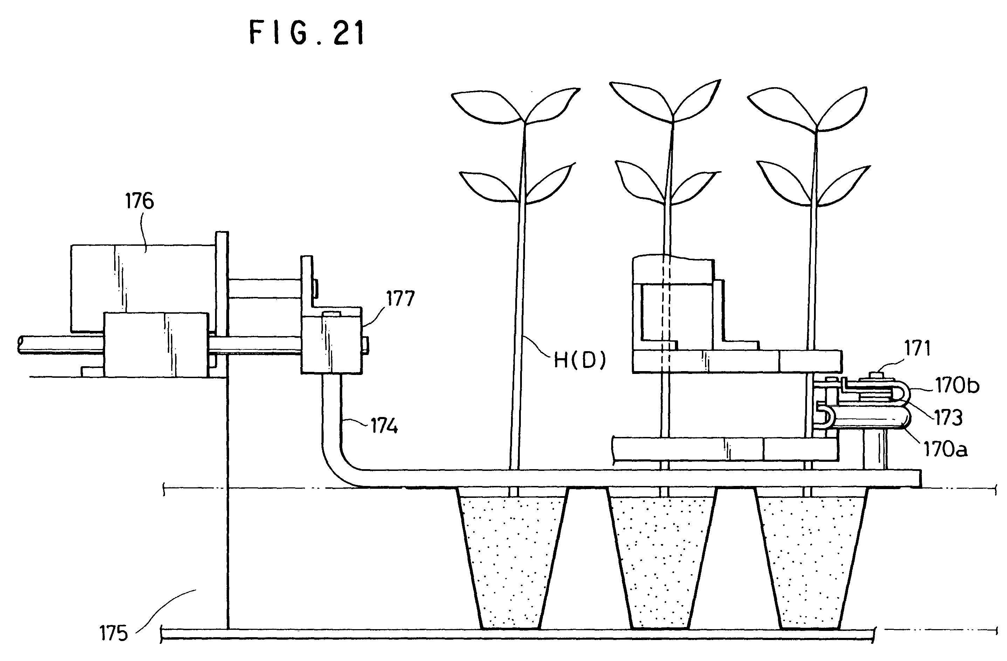

Figure 21 is a side view of a second embodiment of seedling posture adjustment means.

Figure 22 is a detailed view of a seedling pulling plate used in the seedling posture adjustment means of Figure 21.

### DESCRIPTION OF THE PREFERRED EMBODIMENTS

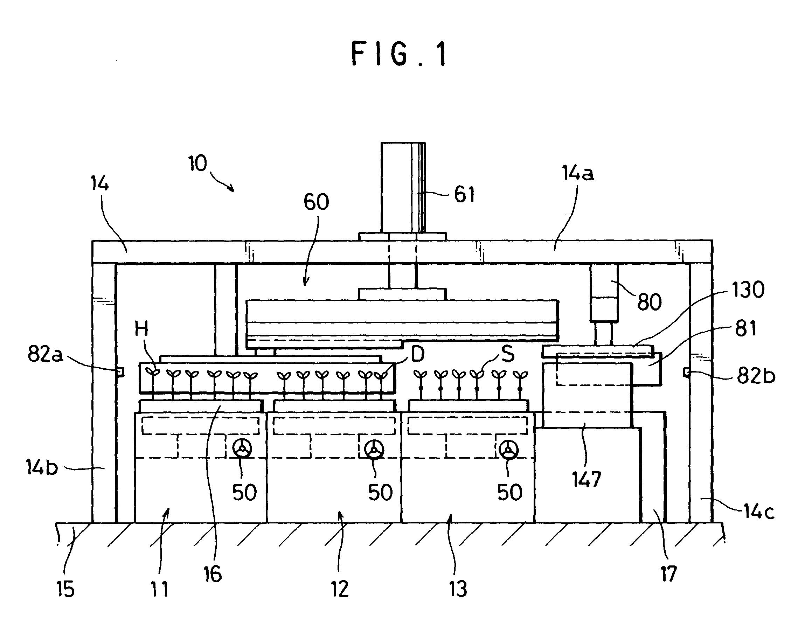

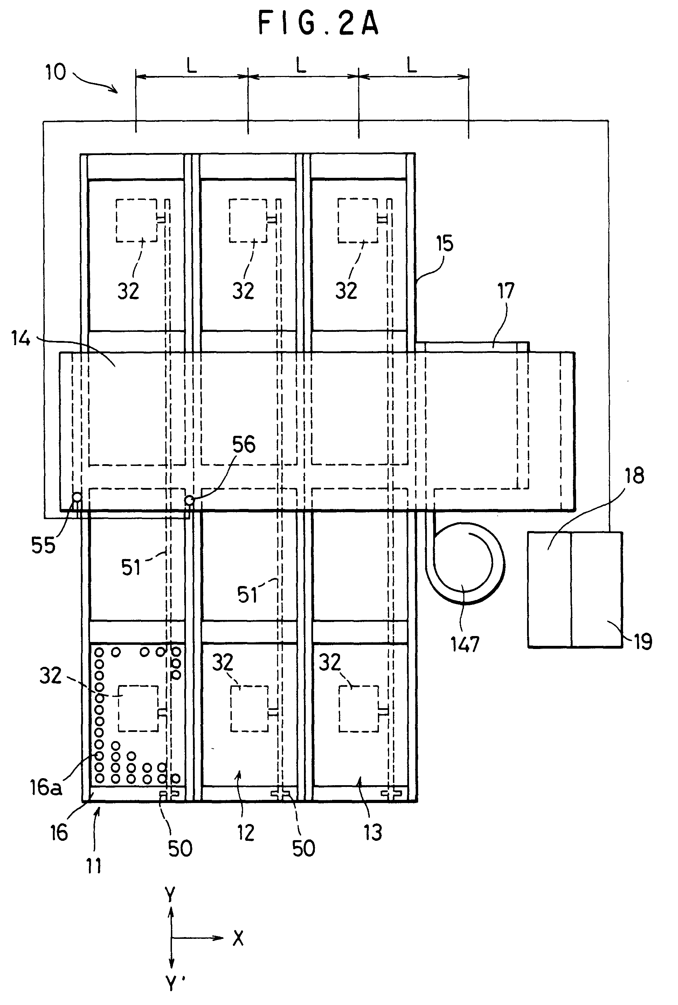

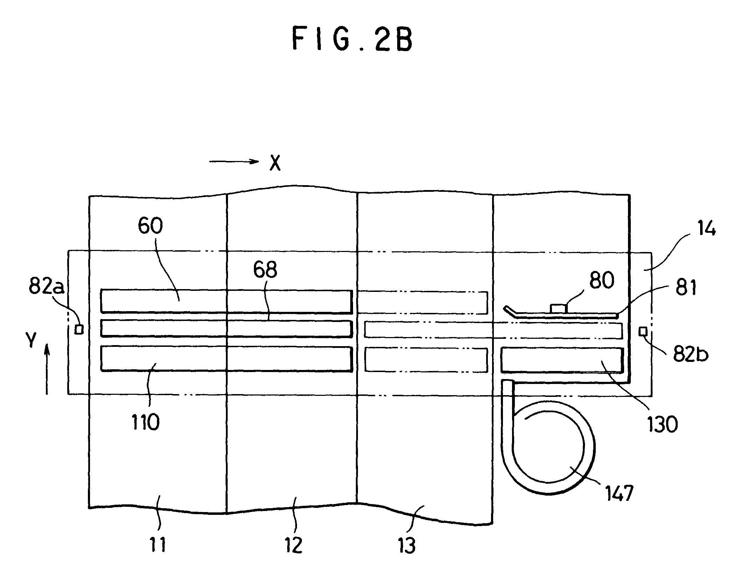

As shown in Figures 1 and 2A, an apparatus for grafting seedlings generally indicated by a reference numeral 10 which is an embodiment of the present invention includes scion carrying means 11, root stock carrying means 12 which is spaced by a distance L from the scion carrying means 12 and located parallel thereto, grafted seedling carrying means 13 which is spaced by a distance L from the root stock carrying means 12 and located parallel thereto, and a frame 14 mounted with a seedling grasping and moving mechanism 60 for performing a grafting operation, described later, a seedling cutting mechanism 110, and a seedling jointing mechanism 130 and consisting of a beam 14a and two columns 14b and 14c. The apparatus 10 for grafting seedlings is set on a base 15. Each of the scion carrying means 11, the root stock carrying means 12 and the grafted seedling carrying means 13 comprises a known carrying means, such as a belt conveyer, etc. A tray 16 is disposed on the carrying means 11, 12 and 13 respectively, and each tray 16 is formed with a plurality of pots 16a (typically, in this embodiment, six rows of the pots in X direction and twelve rows of the pots in Y direction are provided) in which each of a scion seedling H, a root stock seedling D and a grafted seedling S is received. A waste box 17 for receiving an unnecessary upper portion of the root stock seedling D is mounted adjacent to the grafted seedling carrying means 13 and below the frame 14. Further, a clip feeder 147 for feeding a clip 131 to the seedling jointing mechanism 130 is disposed adjacent to the waste box 17. Furthermore, a compressor 18 for driving the seedling grasping and moving mechanism 60, etc. and a central processing unit 19 including an electrical control circuit for controlling the grafting operation are provided adjacent to the frame 14.

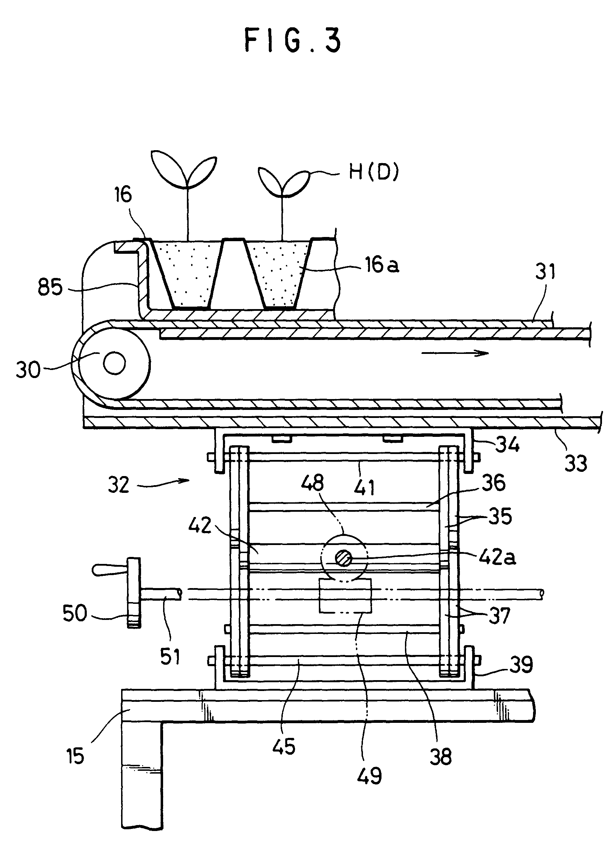

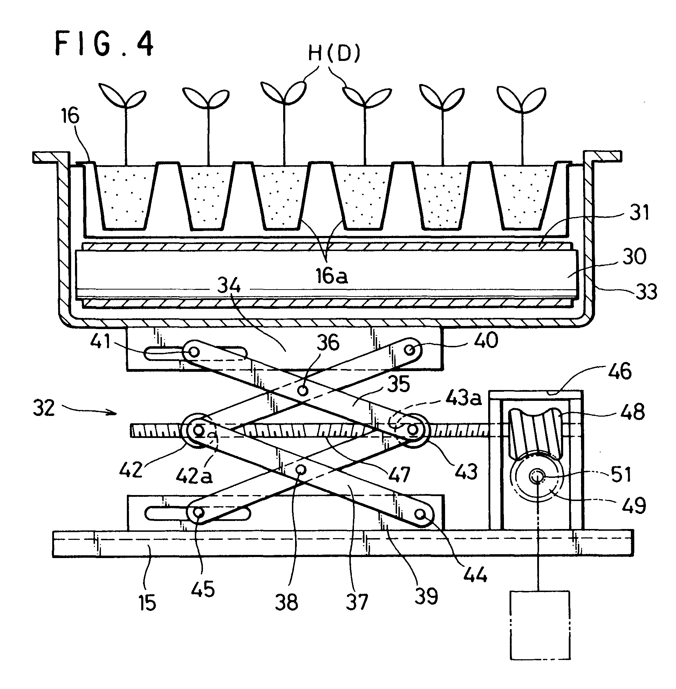

As shown in Figures 3 and 4, each of the scion carrying means 11, the root stock carrying means 12, and the grafted seedling carrying means 13 includes an endless belt 31 which is wound on pulleys 30 each provided on the front and rear ends of the means and rotated by motor (not shown). The front and rear ends of each means are provided with means 32 for raising and lowering each means respectively to adjust the vertical position of the seedling. Each means 32 includes a base body 33 enclosing the both sides and the bottom portions of the belt 31, an upper mounting plate 34 secured to the base body 33, an upper linkage member 35 consisting of two elements each having the central portion pivoted to each other by a shaft 38, a lower linkage member 37 consisting of two elements each having the central portion pivoted to each other by a shaft 40, and a lower mounting plate 39 secured to the base 5, one end of the upper side of the upper linkage member 35 being pivoted to the upper mounting plate 34, the other end of the upper side of the upper linkage member 35 being mounted on the upper mounting plate 34 by a shaft 41 so as to be slided horizontally, the ends of the lower side of the upper linkage member 35 being pivoted to the corresponding ends of the upper side of the lower linkage member 37 by shafts 42 and 43, one end of the lower side of the lower linkage member 37 being pivoted to the lower mounting plate 39 by a shaft 44, the other end of the lower side of the lower linkage member 37 being mounted on the lower mounting plate 39 by a shaft 45 so as to be slided horizontally. The center portions of the shafts 42 and 43 are formed with internal screw threads 42a and 43a respectively. Shaft 47 each provided at it front and rear portions with external screw thread of the sense opposite to each other and rotatably supported by a bearing 46 is screwed into the internal screw threads 42a and 43a. A worm gear 48 is secured to the end of the shaft 47, and adjacent to the worm gear 48, an actuating rod 51 having a handle 50 and a gear 49 mating with the worm gear 48 is provided.

According to the above construction, when the actuating shaft 51 is rotated manually or by a motor (not shown), the upper and lower linkage members 35 and 37 are extended or retracted. As a result, the base body 33 and thus, each of the scion carrying means 11, the root stock carrying means 12 and the grafted seedling carrying means 13 can be raised and lowered separately.

Further, as shown in Figure 2A, each of the scion carrying means 11 and the root stock carrying means 12 is provided at its proper positions with sensors 55 and 56 for sensing the height of the scion seedling H and the root stock seedling D to be carried. On the basis of the result sensed by the sensors 55 and 56, a signal is provided from the central processing unit 19 towards a motor (not shown) to be raised and lowered the scion carrying means 11 and the root stock carrying means 12.

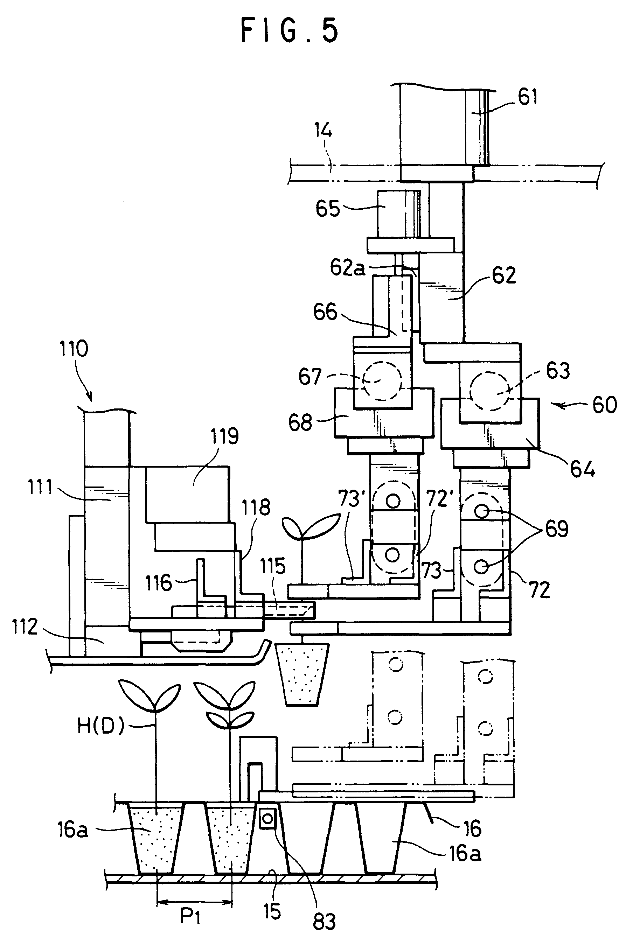

As best shown in Figure 5, the seedling grasping and moving mechanism 60 for picking up the scion seedling H and the root stock seedling D from each tray 16 placed on the scion carrying means 11 and the root stock carrying means 12 to carry them to the predetermined cutting position, includes a first raising and lowering portion 62 which is vertically moved by a first raising and lowering actuator 61 such as an air cylinder secured to the beam 14a of the frame 14. A lower moving frame 64 is mounted on the first raising and lowering portion 62 through a first lateral moving actuator 63 such as an air actuator. A second raising and lowering actuator 65 is secured to the first raising and lowering portion 62. A second raising and lowering portion 66 which is vertically moved along the guide rails 62a provided on the front surface of the first raising and lowering portion 62 by the actuator 65 is provided. An upper moving frame 68 is mounted on the second raising and lowering portion 66 through a second lateral moving actuator 67 such as an air actuator.

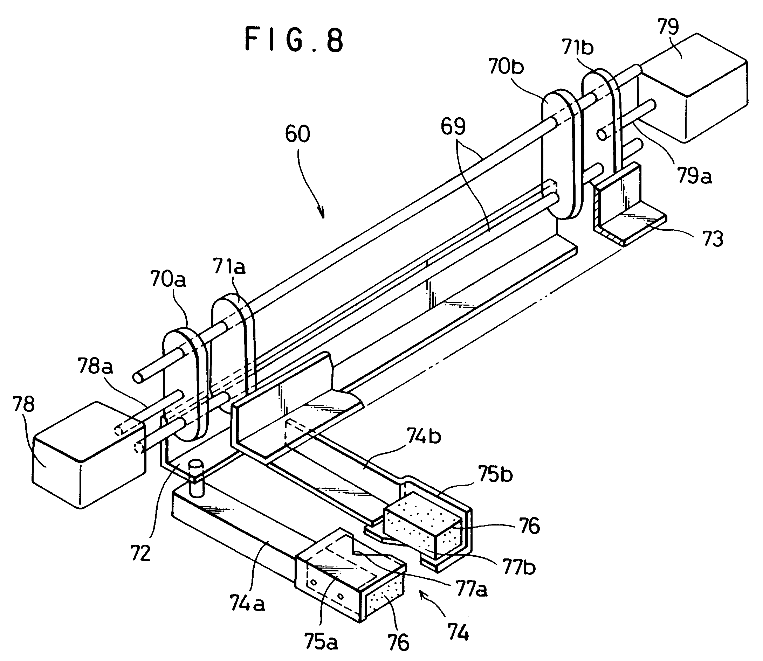

As mainly shown in Figures 5, 7 and 8, the lower moving frame 64 is mounted with a pair of guide shafts 69 which are vertically spaced at an equal distance with respect to each other and slidably provided with a pair of supporting pieces 70a and 70b and a pair of supporting pieces 71a and 71b respectively. As best shown in Figure 8, a member 72 is fixedly mounted on the supporting elements 70a and 70b, while a member 73 is fixedly mounted on the supporting elements 71a and 71b. A lower grasping hand 74 for grasping the seedling consists of a pair of elements 74a and 74b. A plurality of elements 74a (in this embodiment, the number of the elements 74a are twelve because six scion seedlings H and six root stock seedlings D are received in each row of the tray 16) are secured to the member 72 to be spaced by a distance P₀ with respect to each other. Also, twelve elements 74b are secured to the member 73 to be spaced by a distance P₀ with respect to each other. The elements 74a and 74b are provided at its leading ends with Lshaped grasping pieces 75a and 75b respectively. A resilient elements 76 are mounted on the grasping pieces 75a and 75b to prevent the seedling from being damaged during the grasping and the grasping pieces 75a and 75b are formed with V-shaped grooves 77a and 77b. Preferably, the resilient elements 76 are made of sponge. On the other hand, an actuator 78 is mounted on one end of the lower moving frame 64 and an actuator 79 is mounted on the other end of the lower moving frame 64. The piston rod 78a of the actuator 78 is connected with the supporting element 70a, while the piston rod 79a of the actuator 79 is connected with the supporting element 71b.

According to the above construction, when the piston rods 78a and 79a of the actuators 78 and 79 are extended, in each lower grasping hand 74, the space between the elements 74a and 74b is narrowed so that the scion seedlings H and the root stock seedlings D can be grasped by the grasping pieces 75a and 75b simultaneously. On the other hand, when the piston rods 78a and 79a of the actuators 78 and 79 are retracted, in each lower grasping hand 74, the space between the elements 74a and 74b is widened so that the scion seedlings H and the root stock seedlings D can be released by the grasping pieces 75a and 75b simultaneously.

In conjunction with the lower moving frame 64, the seedling grasping and moving mechanism 60 is explained in the above. However, the upper moving frame 68 also has the same construction as the lower moving frame 64, and thus, the elements of the upper moving frame 68 are indicated by adding dash( ' ) to the corresponding elements of the lower moving frame 64 and the detailed explanation is omitted.

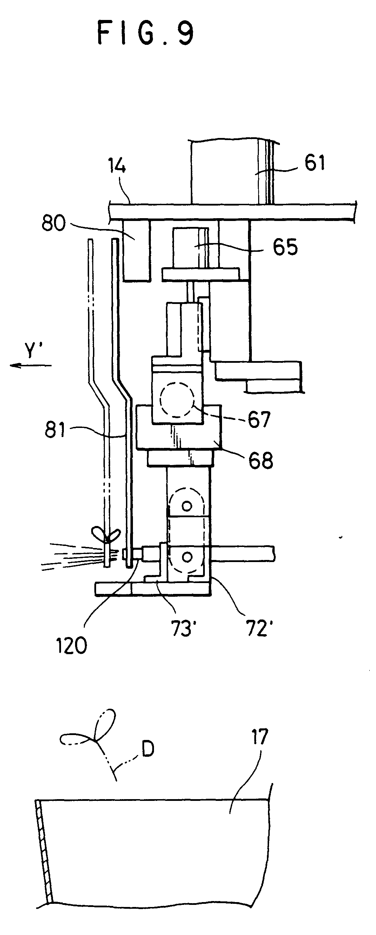

Considering the possibility that the upper portion of the root stock seedling D may not fall into the waste box 17 when each upper grasping hand 74' is released, as shown in Figures 1 and 9, the beam 14a of the frame 14 is provided at the position above the waste box 17 with a push plate 81 adapted to be pushed out toward Y' direction shown in Figure 9 by an electromagnetic solenoid actuator 80. According to such a construction, the push plate 81 is pushed out toward Y' direction by the actuator 80 after each upper grasping hand 74' is released, and thus, the upper portion of the root stock seedling D can be fallen into the waste box 17 positively.

Further, as shown in Figure 1, the columns 14b and 14c of the frame 14 are provided with sensors 82a and 82b for confirming the fall of the upper portion of the root stock seedling D respectively. If the sensors 82a and 82b sense that the upper portion of the root stock seedling D does not fall, the warning is sounded and the operation of the apparatus 10 is stopped.

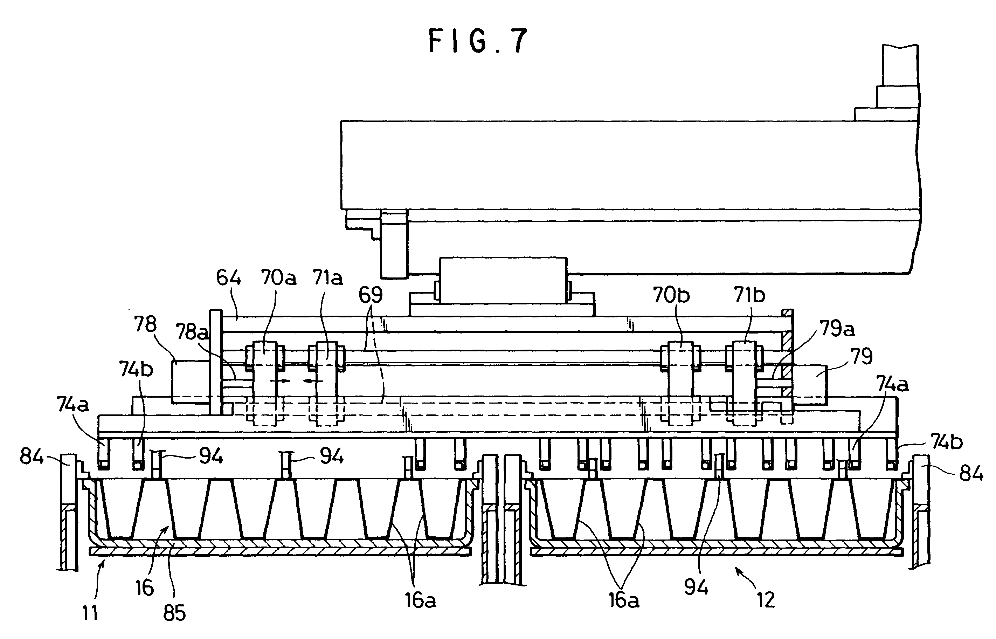

Furthermore, as shown in Figure 5, a sensor 83 comprising a projector and a receptor is provided at the both sides of the scion carrying means 11 and the root stock carrying means 12 and below the seedling grasping and moving mechanism 60 respectively, and the existence of the seedling is adapted to be sensed by whether the light of the sensor 83 passes the space between the pots 16a of the tray 16 or not. As shown in Figure 7, electromagnetic solenoid clippers 84 for pressing both sides of the tray 16 and a box 85 on which the tray is placed to prevent the tray 16 and the box 85 from raising during the picking of the seedling, are provided at the both sides of each of the scion carrying means 11 and the root stock carrying means 12.

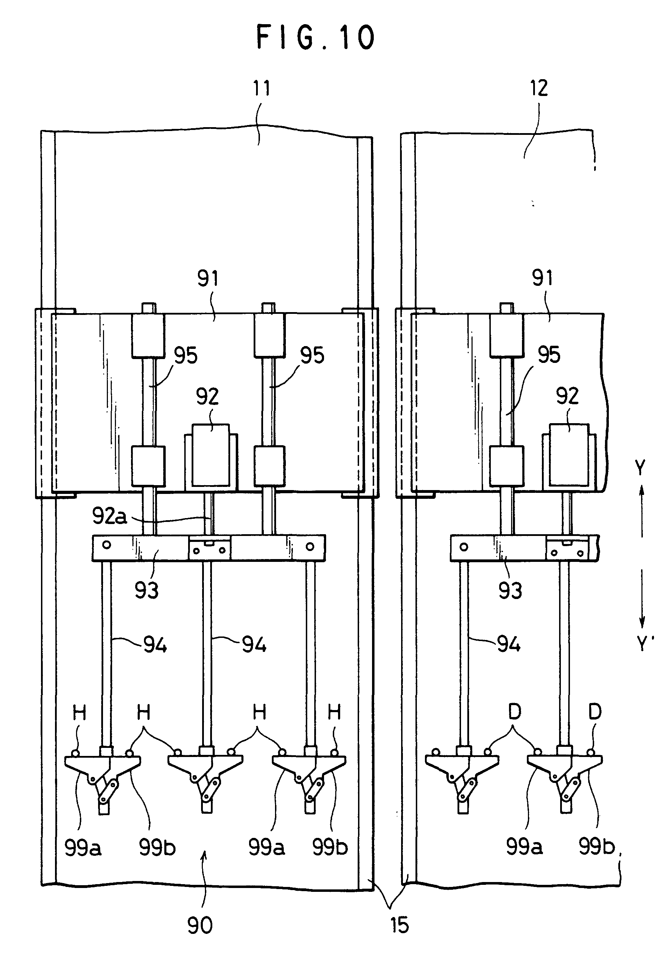

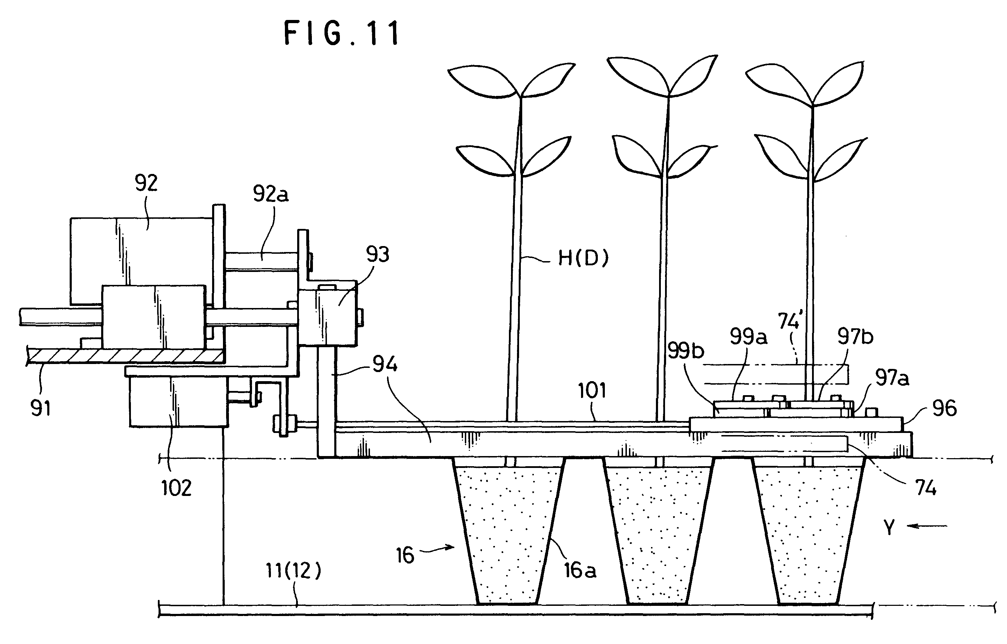

On the other hand, as shown in Figures 10 and 11, the scion carrying means 11 and the root stock carrying means 12 are provided with seedling posture adjustment means 90 for holding the stem of the seedling properly during the grasping of the seedling by the seedling grasping and movement mechanism 60 to facilitate the cutting of the seedling, respectively. The seedling posture adjustment means 90 includes a frame 91 fixed to the base 15, an actuator mounted on the frame 91 and consisting of an electrically-operated, pneumatic or hydraulic motor/cylinder, a mounting holder 93 fixed to the leading end of the piston rod 92a of the actuator 92, and three pushing rods 94 fixed to the mounting holder 93 to be spaced by an equal distance with respect to each other. Each pushing rod 94 has a generally L-shape as shown in Figure 11 so that the upper surface of the tray 16 can be pressed down. Further, guide members 95 for uniformly moving three pushing rods 94 as described later are provided at the both sides of the actuator 92 mounted on the frame 91.

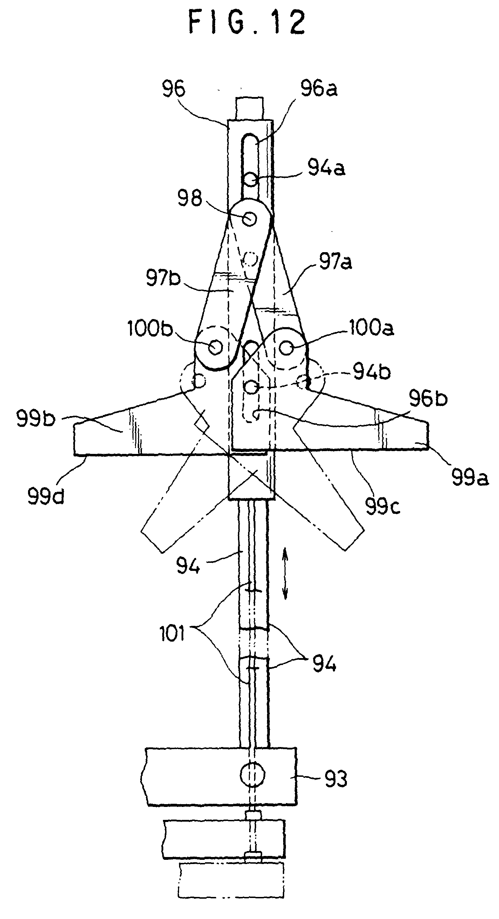

As shown in Figure 12 in detail, a cylindrical member 96 is slidably mounted within the leading end of the pushing rod 94 and the pins 94a and 94b provided on the pushing rod 94 are guided along the slots 96a and 96b formed in the cylindrical member 96 respectively thereby to be slided the cylindrical member 96. One end of each of linkage members 97a and 97b is pivoted to a pin 98 mounted on the cylindrical member 96, while the other end of each of linkage members 97a and 97b are pivoted to seedling pulling plates 99a and 99b for pulling the seedling grasped by the seedling grasping and moving mechanism 60 through pins 100a and 100b respectively. The seedling pulling plates 99a and 99b each having a generally L-shape, as shown in Figure 12, are disposed symmetrically so as to be overlapped with respect to each other and pivoted by a pin 94b. The cylindrical member 96 is provided at its rear end with a wire member 101 such as a music wire or a wire which is adapted to be pulled by an actuator 102 secured to the frame 91.

According to this construction, when the wire members 101 are pushed out by the actuator 102 with the seedling being grasped by the seedling grasping and moving mechanism 60, the seedling pulling plates 99a and 99b are extended as shown in full line in Figure 12. Thereafter, the pushing rods 94 are pulled by the actuator 92 and the stem of the seedling is abutted on the rear edges 99c and 99d of the seedling pulling plates 99a and 99b to be pulled thereby enabling the posture of the seedling to be held properly. During the operation of the seedling posture adjustment means 90, as mentioned above, the upper side of the tray 16 is pushed by the pushing rods 94 thereby to prevent the tray 16 from being raised.

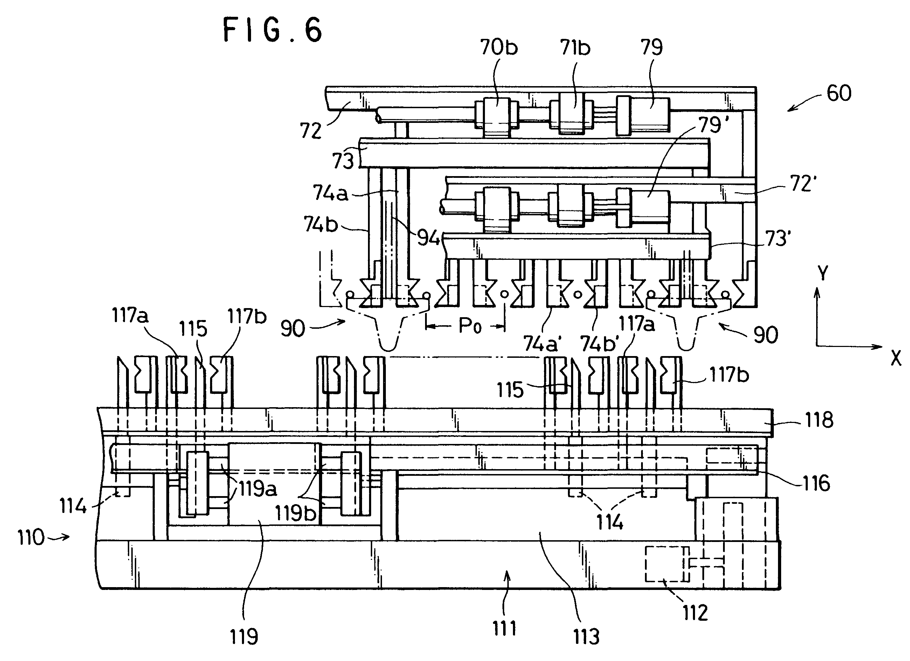

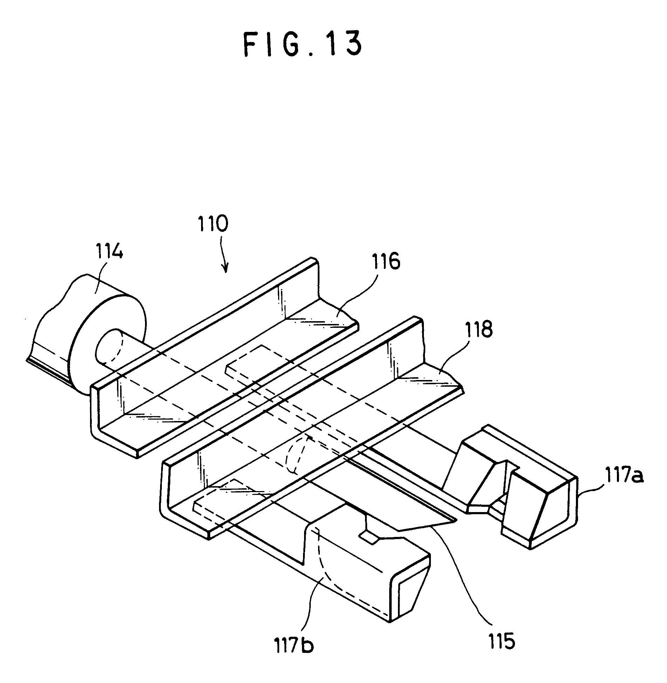

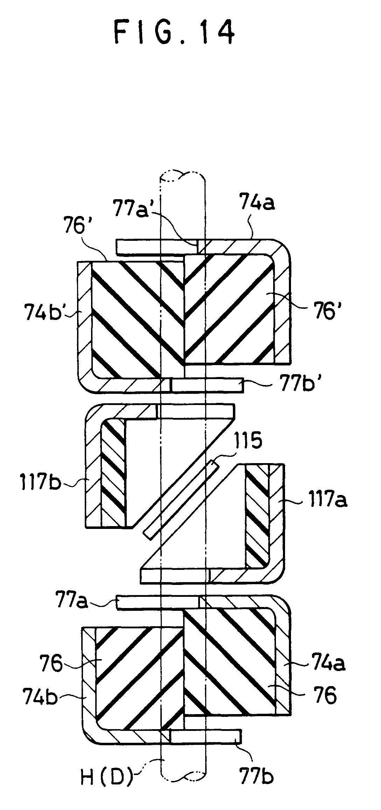

As shown in Figures 5 and 6, the seedling cutting mechanism 110 for cutting the stem of the scion seedling H and the root stock seedling D grasped by the lower and upper grasping hands 74 and 74' includes a frame 111 suspended from the beam 14a of the frame 14. The frame 111 is provided with a cutter supporting member 113 adapted to be moved toward Y direction in Figure 6 by an actuator 112 fixed to the end of the frame 111. A plurality of cutter shafts 114 (in this embodiment, the number of the shafts are twelve) are mounted on the cutter supporting member 113 to be spaced by a distance P₀ with respect to each other and cutters 115 for cutting the stem of the seedling are secured to the cutter supporting member 113. In Figures 13 and 14, each of the cutter shafts 114 is formed as a rod member but a rectangular member or a plate member may be used. Further, as shown in Figure 14, each of the cutters 115 is mounted on each cutter shaft 114 at about 45° with respect to the horizontal plane to improve the cutting ability.

Further, a seedling grasping hand 117 for restraining the seedling to prevent it from moving during the cutting consists of seedling grasping pieces 117a and 117b. As best shown in Figure 6, the frame 111 of the seedling cutting mechanism 110 is provided with a member 116 so as to be moved in X direction and a plurality of seedling grasping hands 117a (in this embodiment, the number of the seedling grasping hands 117a are twelve) are secured to the member 116 to be spaced by a distance P₀ with respect to each other. Also, the frame 111 is provided with a member 118 so as to be moved in X direction and a plurality of seedling grasping hands 117b ( in this embodiment, the number of the seedling grasping hands 117b are twelve ) are secured to the member 118 to be spaced by a distance P₀ with respect to each other. Each of the members 116 and 118 is reciprocated in X direction by piston rods 119a and 119b of an actuator 119 such as an air cylinder respectively. Further, as shown in Figure 13, resilient members are mounted on the grasping pieces 117a and 117b to prevent the stem of the seedling from damaging during the grasping and V-shaped grooves are provided thereon respectively.

According to the above construction, when the piston rods 119a and 119b of the actuator 119 are retracted, the space between the pieces 117a and 117b, in each seedling grasping hand 117, is narrowed to grasp the seedling located at the cutting position by the hand 117 as shown in Figure 14. In this condition, when the cutter supporting member 113 is advanced by the actuator 112, the seedlings can be cut by the cutters 115 simultaneously.

As shown in Figure 9, nozzles 120 for injecting fluid such as a pressurized air toward the cutters 115 whenever the seedlings are cut are provided below the cutters 115, in order to remove the gunk deposited on the cutters 115.

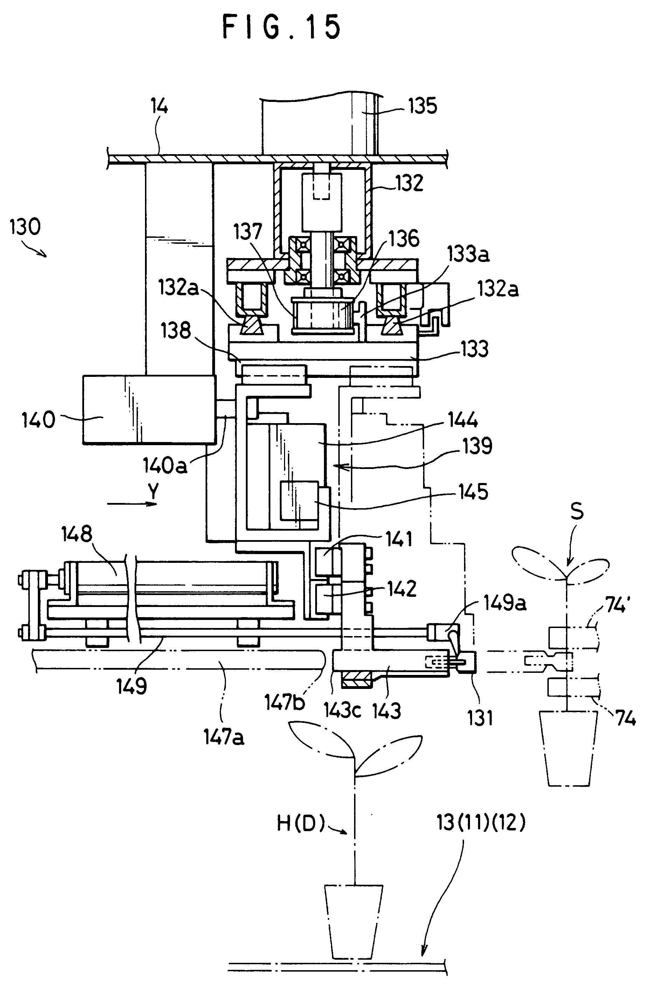

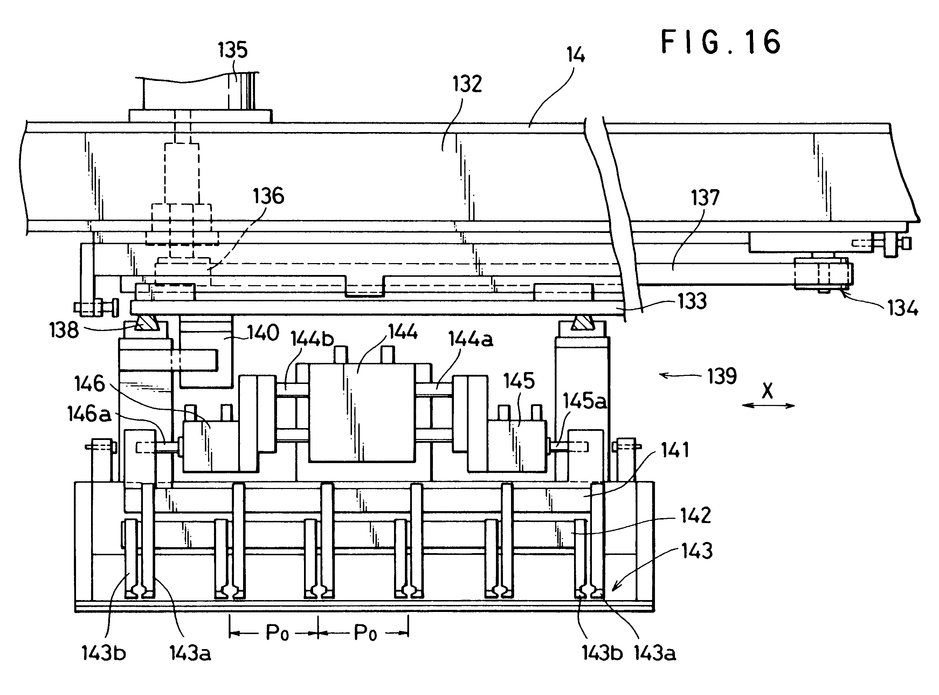

As shown in Figures 15 and 16, the seedling jointing mechanism 130 for jointing the cut area of the upper portion of the scion seedling H and the cut area of the lower portion of the root stock seedling D by a clip 131 includes a supporting body 132 mounted on the underside of the beam 14a of the frame 14. A pair of guide rails 132a extending in X direction is secured to the underside of the supporting body 132 and a guide member 133 is mounted on the guide rails 132a to be moved in X direction. Further, the underside of the supporting body 132 is provided with a driven pulley 134 and a driving pulley 136 driven by a motor 135 secured to the beam 14a of the frame 14 and an endless belt 137 is wound about these pulleys 134 and 136. The endless belt 137 is fixedly connected on the connecting element 133a of the guide member 133 at a predetermined position. On the other hand, a pair of guide rails 138 extending in Y direction is secured to the underside of the guide member 133 and a moving member 139 is mounted on the guide rails 138 to be moved in Y direction. The moving member 139 is moved by a piston rod 140a of an actuator 140 suspended from the frame 14.

As best shown is Figure 16, the moving member 139 is provided with a member 141 to be moved in X direction and a plurality of elements 143a (in this embodiment, the number of the elements are six) providing one of paired clip holders 143 are secured to the member 141 respectively to space P₀ apart with respect to each other. The moving member 139 is also provided with a member 142 to be moved in X direction and six elements 143b providing the other of the clip holder 143 are secured to the member 142 respectively to space P₀ apart with respect to each other. Further, a first actuator 144 for clipping is secured to the moving member 139 and piston rods 144a and 144b each projecting from opposite sides of the first actuator 144 are connected with a second actuator 145 for clipping and a third actuator 146 for clipping respectively. The member 142 is secured to the piston rod 145a of the second actuator 145, while the member 141 is secured to the piston rod 146a of the third actuator 146.

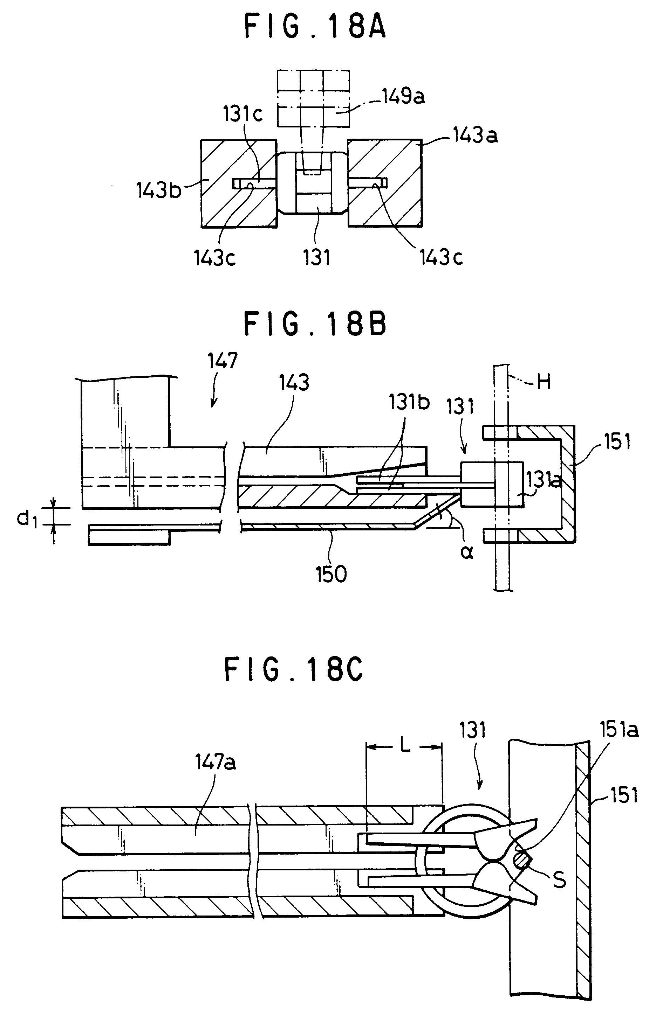

As best shown in Figure 18A, each of the elements 143a and 143b of the clip holder 143 is formed with a groove 143c opened inwardly into which a ring spring 131c of the clip 131 is inserted so that the clip 131 can be guided in the elements 143a and 143b.

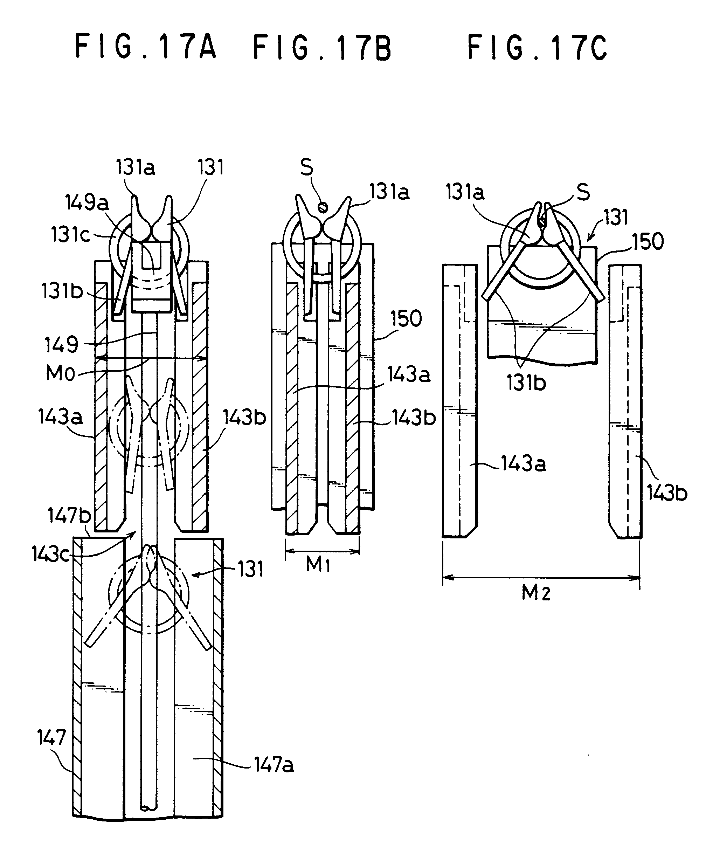

As shown in Figure 15, a clip feeder 147 for supplying the clip 131 to the clip holder 143 is provided below the moving member 139 adjacent to an input end 143c of the clip holder 143. The clip feeder 147 comprises a known vibratory parts feeder wherein, as the clothespins-type clip 131 made of synthetic resin material is input in a supply path 147a of the clip feeder 147 randomly, as shown in Figure 17A, the grasping portions 131a of the clip 131 is adapted to be directed toward the supplying port 147b of the clip feeder 147 due to the vibration of the clip feeder. An actuator 148 is provided above the supply path 147a of the clip feeder 147 and a piston rod 149 actuated by an actuator 148 is mounted directly above the supply path 147a of the clip feeder 147. A press member 149a for advancing the clip 131 through the supply path 147a to the leading end of the clip holder 143 is mounted on the leading end of the piston rod 149.

As best shown in Figure 18A, a clip supporting member 150 is provided below the clip holder 143 at the position spaced at a small distance d₁ from the bottom of the clip holder 143 and the clip supporting member 150 is bent upwardly by an angle α. The clip supporting member 150 is made of metal leaf and serves to effect the grasping of the seedling made by the clip 131 positively. In other words, as the clip 131 is transferred from the condition of just before the seedling is grasped (as shown in Figure 17B) to the condition of just after the seedling is grasped (as shown in Figure 17C), the distance L from the leading end of the clip holder 143 to the grasping portions 131b of the clip 131 becomes small gradually, because the grasping portions 131b are moved in a direction away from each other. Therefore, unless the clip 131 is supported by the clip supporting member 150, the clip 131 is directed downwardly and thus, it is difficult to grasp the seedling positively. Further, in the case where the slight time lag during the disengagement of the clip 131 from the elements 143a and 143b occurs, the clip supporting member 150 can prevent the inclination of the clip 131.

As shown in Figures 18B and 18C, a seedling press member 151 for effecting the positive grasping of the seedling by the clip 131, during the joint of the scion seedling H and the root stock seedling D by the seedling jointing mechanism 130, is provided in front of the clip holder 143. The seedling press member 151 consists of a channel-shaped member and is formed with a groove 151a for holding the seedling during the joint operation. Therefore, because the seedling is retained by the seedling press member 151 when the seedling is pressed by the clip 131 during the joint, the jointing of the seedling by the clip can be effected positively.

According to the above construction, when the piston rods 144a and 144b of the actuator 144 are retracted, in each clip holder 143, the space between the elements 143a and 143b is widened to M₀ shown in Figure 17A thereby providing the condition receiving the clip 131 from the supply path 147a of the clip feeder 147. On the other hand, when the pistion rods 144a and 144b of the actuator 144 are extended, in each clip holder 143, the space between the elements 143a and 143b is narrowed to M₁ shown in Figure 17B thereby maintaining the condition wherein the grasping portion 131a is widened. In this condition, when the piston rods of 145a and 146b are extended by the actuators 145 and 146, in each clip holder 143, the space between the elements 143a and 143b is widened to M₂ shown in Figure 17C thereby grasping the jointing area of the seedling by the seedling grasping portions 131a of the clip 131. In addition, when piston rods 145a and 146a are retracted by the actuators 145 and 146, in each clip holder 143, the space between the elements 143a and 143b is narrowed to Mₒ shown in Figure 17A thereby providing the condition receiving the clip 131 again.

How seedlings are grafted by the apparatus 10 constructed in accordance with the above will now be explained.

The scion seedlings H and the root stock seedlings D each placed in the tray 16 on the scion seedling carrying means 11 and the root stock seedling carrying means 12 are carried in Y direction shown in Figure 2A, P₁ by P₁ periodically. When the desired seedlings H and D reach directly under the seedling grasping and moving machanism 60, the lower and upper moving frames 64 and 68 are lowered by the first and second actuator 61 and 65 and the space between the lower and upper grasping hands 74 and 74 ' is narrowed by the extension of the piston roods 78a and 79a of the actuators 78 and 79 thereby to grasp the lower and upper portions of six scion seedlings H and the lower and upper portions of six root stock seedlings by the lower and upper grasping hands 74 and 74' simultaneously. Then, the lower and upper moving frames 64 and 68 are raised to a predetermined height by the actuators 61 and 65 to pick six scion seedlings H and six root stock seedlings D grasped by the hands 74 and 74 ' from the pots 16a. Thereafter, the posture of the seedlings is held properly by the seedling posture adjustment means 90. Then, the frame 111 is approached toward the seedling grasping and moving mechanism 60 by the actuator 112 to hold the seedlings by the hands 117 fixedly and advance the cutters 115 by the actuator 112 thereby cutting six scion seedlings H and six root stock seedlings D simultaneously. After the hands 117 are retreated, the first lateral moving actuator 63 is actuated to move the lower moving frame 64 in X direction shown in Figure 2A by a distance L. At the same time, after the upper moving frame 68 is raised by a small distance by the actuator 65, the upper moving frame 68 is moved in X direction by a distance 2L by the actuator 67, and then, lowered by a small distance. Thereby, the upper portion of the scion seedling H and the lower portion of the root stock seedling D will be positioned above the grafted seedling carrying means 13 to contact the cut area of the upper portion with the cut area of the lower portion. Futher, the lower portion of the scion seedling H will be positioned above the root stock seedling carrying means 12, and the upper portion of the root stock seedling D will be positioned above the waste box 17.

On the other hand, simultaneously with the above mentioned seedling grasping and moving operation and seedling cutting operation, the seedling jointing mechanism 130 is actuated to charge the clip 131 from the clip feeder 147 to each clip holder 143 sequentially. After the charge of all clips 131 is completed, the seedling jointing mechanism 130 is approached toward the joint position of the seedlings by the actuator 140, as shown in the dashed line in Figure 15. Then, when the piston rods 144a and 144b of the actuator 144 are extended, the clip holder 143 takes the condition which the seedling can be grasped, as shown in Figure 17B. Thereafter, when the piston rods 145a and 145b are extended by the actuators 145 and 146, the seedling can be grasped by the clip, as shown in Figure 17C.

Next, the lower and upper moving frames 64 and 68 are lowered to retract the piston rods 78a and 79a of the actuators 78 and 79. Then, the grafted seedling S falls in the pot 16a of the tray 16 placed on the grafted seedling carrying means 13 which moves in Y' direction shown in Figure 2A by a distance P₁ periodically, and the grafted seedling S is carried to a predetermined waste position.

The present invention has thus been shown and described with reference to specific embodiment. However, it should be noted that the present invention is in no way limited to the details of the described arrangements but changes and modifications may be made without departing from the scope of the appended claims.

For example, in the above embodiment, the apparatus for grafting seedlings is provided with the grafted seedling carrying means 13 and arranged such that the upper portion of the scion seedling H and the lower portion of the root stock seedling D are moved above the grafted seedling carrying means 13 by the seedling grasping and moving means 60. However, the apparatus for grafting seedlings can also be arranged such that the upper portion of the scion seedling H is moved above the root stock seedling carrying means 12 by the seedling grasping and moving mechanism 60 without providing the grafted seedling carrying means 13.

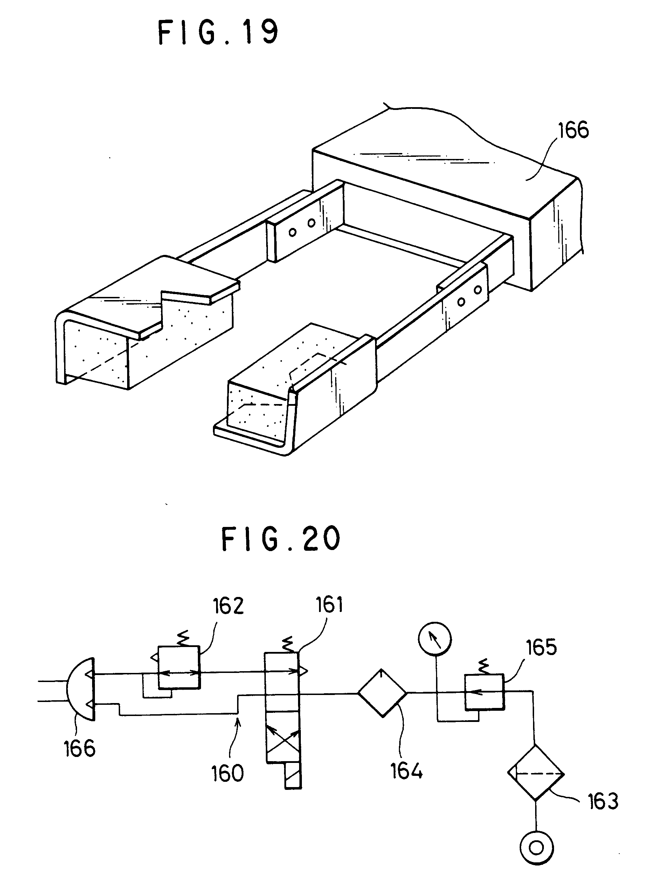

Further, in the above embodiment, the apparatus 10 is arranged such that a multiple grasping hands 74 and 74' move in the transversal direction by the actuators simultaneously, and thus, the opening and closing movement in all hands 74 and 74 ' is identical with respect to each other. Therefore, it is difficult to adjust the movement individually, depending on the difference in quality between the seedlings and the difference in size and softness therebetween due to the individual difference of the seedlings. Therefore, rocking typed air actuator 166 as shown in Figure 19 may be used together with a pneumatic circuit 160 shown in Figure 20. In the pneumatic circuit 160, a pressure reducing valve or pressure regulating valve 162 is provided between an ON/OFF control valve 161 and the actuators 74 and 75. Thereby, it is possible to adjust the opening and closing movement in each hand separately. In Figure 20, the numerals 163, 164 and 165 indicate a filter, a lubricator and relief valve respectively.

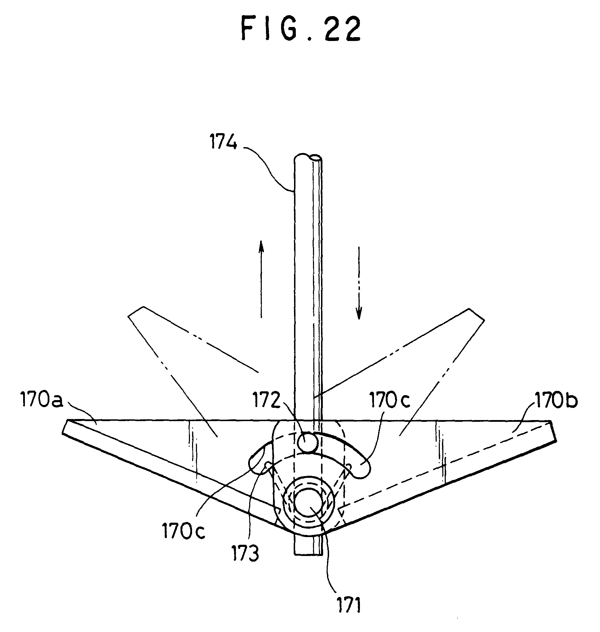

Further, in the above embodiment, the seedling pulling plates 99a and 99b of the seedling posture adjustment means 90 is arranged to be pulled by the wire member 101 such as a music wire and a wire. However, seedling pulling plates 170a and 170b as shown in Figure 22 may be used. The seedling pulling plates 170a and 170b each having a right angle triangular shape are disposed symmetrically to be overlapped with respect to each other and pivoted to the leading end of the press rod 174 by a pin 171. Each of the seedling pulling plates 170a and 170b is formed with an arcuate slot 170c along which a pin 172 of the press rod 174 is guided so that the seedling pulling plates 170a and 170b can be adapted to be pivoted on the pin 171 respectively. Normally, the seedling pulling plates 170a and 170b are maintained extended as shown in full line in Figure 22 by a spring 173. The press rod 174 has a generally L shape as viewed in the side, as the press rod 94 shown in Figure 11 and it is pulled by an actuator 176 provided on a frame 175 through a mounting holder 177 as the seedling posture adjustment means shown in Figures 10 and 11. If the seedling pulling plates 170a and 170b are to be used, the press rod 174 is pushed toward the arrow of the dashed line shown in Figure 22 until the seedling grasped by the seedling grasping and moving mechanisn 60 abuts on the inclined side of the seedling pulling plates 170a and 170b. When the press rod 174 is pushed further, because the seedling abuts on the inclined side of the plates 170a and 170b, the plates 170a and 170b are biased against the spring 173 as shown in the dashed line in Figure 22 until the plates 170a and 170b are passed beyond the seedling. In this condition, when the press rod 174 is pulled toward the arrow of the full line shown in Figure 22, the seedling abuts on the long side of the plates 170a and 170b to enable the posture of the seedling to be held properly.

Further, in the above embodiment, the seedling jointing mechanism 60 is arranged such that the upper portion of the scion seedling H and the lower portion of the root stock seedling D are jointed by the clip. However, another jointing mechanism other than the clip may be used to joint them.

According to the present invention, a plurality of seedlings can be grafted simultaneously by the seedling grasping and moving mechanism, the seedling cutting mechanism and the seedling jointing mechanism to improve the efficiency of the grafting significantly and, at the same time, to save the working space because the apparatus is compact.

## Claims

1. An apparatus for grafting seedlings including scion seedling carrying means (11) and root stock seedling carrying means (12) disposed parallel to the scion seedling carrying means (11), said apparatus further comprising
a seedling grasping and moving mechanism (60) for picking scion seedlings and root stock seedlings from the scion seedling carrying means (11) and the root stock seedling carrying means (12) to move them to a predetermined position, the seedling grasping and moving mechanism (60) having upper seedling grasping means for grasping the upper portions of scion seedlings and root stock seedlings simultaneously, lower seedling grasping means for grasping the lower portions of scion seedlings and root stock seedlings simultaneously, means for moving the upper and lower seedling grasping means vertically, and means for moving the upper and lower seedling grasping means in a direction perpendicular to the seedling carrying direction, whereby the upper seedling grasping means and the lower seedling grasping means are movable independently of each other;
a seedling cutting mechanism (110) for cutting the scion and root stock seedlings grasped by the upper and lower seedling grasping means simultaneously between the portions grasped by said upper and lower seedling grasping means; and
a seedling jointing mechanism (130) for jointing the upper portions of the scion seedlings and the lower portions of the root stock seedlings each cut by the seedling cutting mechanism (110) simultaneously.

2. An apparatus for grafting seedlings in accordance with claim 1, said apparatus further including grafted seedling carrying means (13) disposed parallel to the root stock seedling carrying means (12).

3. An apparatus for grafting seedlings in accordance with claim 1 or 2 wherein the seedling jointing mechanism (130) is positioned on the locus along which the upper and lower seedling grasping means are moved.

4. An apparatus for grafting seedlings in accordance with any one of claims 2 or 3 wherein each of the scion seedling carrying means (11), the root stock seedling carrying means (12) and the grafted seedling carrying means (13) is provided with means (32) for raising and lowering them separately.

5. An apparatus for grafting seedlings in accordance with claim 4 wherein each of the scion seedling carrying means (11) and the root stock seedling carrying means (12) is provided with a sensor for sensing the height of the scion and root stock seedlings carried by the carrying means, each of the means (32) provided on the scion seedling carrying means (11) and the root stock seedling carrying means (12) is arranged to raise and lower them automatically on the basis of the result sensed by the sensors.

6. An apparatus for grafting seedlings in accordance with any one of claims 1 to 5 wherein the apparatus further includes a pressure plate for assisting to release the grasping of the upper portions of the root stock seedlings grasped by the upper seedling grasping means during the release.

7. An apparatus for grafting seedlings in accordance with any one of claims 1 to 6 wherein the apparatus further includes a sensor for sensing to release the grasping of the upper portions of the root stock seedlings grasped by the upper seedling grasping means during the release, and the apparatus is arranged to be stopped when the release fails.

8. An apparatus for grafting seedlings in accordance with any one of claims 1 to 7 wherein each of the scion seedling carrying means (11) and the root stock seedling carrying means (12) is provided with seedling posture adjustment means (90) adapted to hold the seedling substantially vertically during the grasping of the seedling by the upper and lower grasping means.

9. An apparatus for grafting seedlings in accordance with any one of claims 1 to 8 wherein the seedling cutting mechanism (110) includes seedling grasping hands (117) for preventing the seedling from tottering during the cutting.

10. An apparatus for grafting seedlings in accordance with any one of claims 1 to 9 wherein the seedling cutting mechanism (110) further includes nozzles (120) for injecting fluid toward cutters.

11. An apparatus for grafting seedlings in accordance with any one of claims 1 to 10 wherein the seedling jointing mechanism (130) is arranged to joint the upper portion of the scion seedling and the lower portion of the root stock seedling by a clip.

12. An apparatus for grafting seedlings in accordance with claim 11 wherein the seedling jointing mechanism (130) includes a seedling press member (151) for preventing the seedling from tottering during the jointing of the seedlings by the clip.

13. An apparatus for grafting seedlings in accordance with claims 11 or 12 wherein the seedling jointing mechanism (130) further includes a clip supporting member (150) for supporting the leading end of the clip before the seedlings are jointed by the clip.

## Patentansprüche

1. Apparat zum Pfropfen von Sämlingen mit einem Pfropfreissämling-Transportmittel (11) und einem parallel zum Pfropfreissämling-Transportmittel (11) angeordneten Wurzelstocksämling-Transportmittel (12), wobei der Apparat weiterhin umfasst:
- einen Sämlinggreif- und Bewegemechanismus(60) zum Entnehmen von Pfropfreissämlingen und Wurzelstocksämlingen von dem Pfropfreissämling-Transportmittel (11) und dem Wurzelstocksämling-Transportmittel (12), um diese zu einer vorbestimmten Stelle zu bewegen, wobei der Sämlinggreif- und Bewegemechanismus (60) obere Sämlinggreifmittel zum gleichzeitigen Greifen der oberen Teile der Pfropfreissämlinge und Wurzelstocksämlinge, untere Sämlinggreifmittel zum gleichzeitigen Greifen der unteren Teile der Pfropfreissämlinge und Wurzelstocksämlinge, Mittel zum vertikalen Bewegen der oberen und unteren Sämlinggreifmittel und Mittel zum Bewegen der oberen und unteren Sämlinggreifmittel in einer Richtung senkrecht zur Sämlingtransportrichtung, wodurch die oberen Sämlinggreifmittel und die unteren Sämlinggreifmittel unabhängig von einander bewegbar sind, aufweist;
- einen Sämlingschneidemechanismus (110) zum gleichzeitigen Schneiden der von den oberen und unteren Sämlinggreifmittel ergriffenen Pfropfreis- und Wurzelstocksämlinge zwischen den von den oberen und unteren Sämlinggreifmitteln ergriffenen Teilen und
- einen Sämlingverbindungsmechanismus (130) zum Verbinden der jeweils gleichzeitig von dem Sämlingschneidemechanismus (110) geschnittenen oberen Teile der Pfropfreissämlinge und der unteren Teile der Wurzelstocksämlinge.

2. Apparat zum Pfropfen von Sämlingen nach Anspruch 1, wobei der Apparat weiterhin ein parallel zu dem Wurzelstocksämling-Transportmittel (12) angeordnetes Transportmittel (13) für gepfropfte Sämlinge umfasst.

3. Apparat zum Pfropfen von Sämlingen nach Anspruch 1 oder 2, dadurch gekennzeichnet dass der Sämlingverbindungsmechanismus (130) an der Stelle positioniert ist, entlang der die oberen und unteren Sämlinggreifmittel bewegt werden.

4. Apparat zum Pfropfen von Sämlingen nach einem der Ansprüche 2 oder 3, dadurch gekennzeichnet, dass jedes der Pfropfreissämling-Transportmittel (11), Wurzelstocksämling-Transportmittel (12) und Transportmittel (13) für die gepfropften Sämlinge mit Mitteln (32) für deren separates Heben und Absenken versehen ist.

5. Apparat zum Pfropfen von Sämlingen nach Anspruch 4, dadurch gekennzeichnet, dass jedes der Pfropfreissämling-Transportmittel (11) und Wurzelstocksämling-Transportmittel (12) mit einem Sensor zum Erfassen der Höhe der durch die Transportmittel transportierten Pfropfreis- und Wurzelstocksämlinge versehen ist, jedes der auf dem Pfropfreissämling-Transportmittel (11) und Wurzelstocksämling-Transportmittel (12) vorgesehenen Mittel (32) so angeordnet ist, dass es diese automatisch auf der Grundlage des durch die Sensoren erfassten Ergebnisses hebt und absenkt.

6. Apparat zum Pfropfen von Sämlingen nach einem der Ansprüche 1 bis 5, dadurch gekennzeichnet, dass der Apparat weiterhin eine Druckplatte zur Unterstützung des Lösens des Greifens der durch das obere Sämlinggreifmittel ergriffenen oberen Teile der Wurzelstocksämlinge während des Lösens umfasst.

7. Apparat zum Pfropfen von Sämlingen nach einem der Ansprüche 1 bis 6, dadurch gekennzeichnet, dass der Apparat weiterhin einen Sensor zum Erfassen umfasst, um das Greifen der durch das obere Sämlinggreifmittel ergriffenen oberen Teile der Wurzelstocksämlinge während des Lösens zu lösen, und der Apparat so ausgelegt ist, dass er bei Scheitern des Lösens angehalten wird.

8. Apparat zum Pfropfen von Sämlingen nach einem der Ansprüche 1 bis 7, dadurch gekennzeichnet, dass jedes der Pfropfreissämling-Transportmittel (11) und Wurzelstocksämling-Transportmittel (12) mit einem Sämlinghaltungseinstellmittel (90) versehen ist, das dafür ausgelegt ist, den Sämling während des Greifens des Sämlings durch die oberen und unteren Greifmittel im Wesentlichen vertikal zu halten.

9. Apparat zum Pfropfen von Sämlingen nach einem der Ansprüche 1 bis 8, dadurch gekennzeichnet, dass der Sämlingschneidemechanismus (110) Sämlinggreifhände (117) umfasst, um zu verhindern, dass der Sämling während des Schneidens hin- und herwackelt.

10. Apparat zum Pfropfen von Sämlingen nach einem der Ansprüche 1 bis 9, dadurch gekennzeichnet, dass der Sämlingschneidemechanismus (110) weiterhin Düsen (120) zum Einspritzen von Fluid zu den Schneidvorrichtungen hin umfasst.

11. Apparat zum Pfropfen von Sämlingen nach einem der Ansprüche 1 bis 10, dadurch gekennzeichnet, dass der Sämlingverbindungsmechanismus (130) so ausgelegt ist, dass er den oberen Teil des Pfropfreissämlings und den unteren Teil des Wurzelstocksämlings durch eine Klammer verbindet.

12. Apparat zum Pfropfen von Sämlingen nach Anspruch 11, dadurch gekennzeichnet, dass der Sämlingverbindungsmechanismus (130) ein Sämlingpresselement (151) umfasst, um zu verhindern, dass der Sämling während des Verbindens der Sämlinge durch die Klammer hin- und herwackelt.

13. Apparat zum Pfropfen von Sämlingen nach Anspruch 11 oder 12, dadurch gekennzeichnet, dass der Sämlingverbindungsmechanismus (130) weiterhin ein Klammerhalterungselement (150) zum Halten des vorderen Endes der Klammer, bevor die Sämlinge durch die Klammer verbunden werden, umfasst.

## Revendications

1. Appareil pour greffer des jeunes plants comprenant un moyen (11) de transport de jeunes plants sous forme de scions et un moyen (12) de transport de jeunes plants sous forme de souches disposé parallèlement au moyen (11) de transport de jeunes plants sous forme de scions, ledit appareil comprenant en outre
un mécanisme (60) de saisie et de déplacement de jeunes plants servant à prélever des jeunes plants sous forme de scions et des jeunes plants sous forme de souches à partir du moyen (11) de transport de jeunes plants sous formes de scions et du moyen (12) de transport de jeunes plants sous forme de souches pour les amener vers une position prédéterminée, le mécanisme (60) de saisie et de déplacement de jeunes plants comportant un moyen supérieur de saisie de jeunes plants destiné à saisir simultanément les parties supérieures de jeunes plants sous forme de scions et de jeunes plants sous forme de souches, un moyen inférieur de saisie de jeunes plants destiné à saisir simultanément les parties inférieures de jeunes plants sous forme de scions et de jeunes plants sous forme de souches, un moyen destiné à déplacer verticalement les moyens supérieur et inférieur de saisie de jeunes plants, et un moyen destiné à déplacer les moyens supérieur et inférieur de saisie de jeunes plants dans une direction perpendiculaire à la direction de transport de jeunes plants, ce par quoi le moyen supérieur de saisie de jeunes plants et le moyen inférieur de saisie de jeunes plants sont mobiles indépendamment l'un de l'autre ;
un mécanisme (110) de coupe de jeunes plants servant à couper simultanément les jeunes plants sous forme de scions et de souches, saisis par les moyens supérieur et inférieur de saisie de jeunes plants, entre les parties saisies par les moyens supérieur et inférieur de saisie de jeunes plants ; et
un mécanisme (130) de réunion de jeunes plants servant à réunir les parties supérieures des jeunes plants sous forme de scions et les parties inférieures des jeunes plants sous forme de souches coupés chacun simultanément par le moyen (110) de coupe de jeunes plants.

2. Appareil pour greffer des jeunes plants selon la revendication 1, ledit appareil incluant en outre un moyen (13) de transport de jeunes plants greffés disposés parallèlement au moyen (12) de transport de jeunes plants sous forme de souches.

3. Appareil pour greffer des jeunes plants selon la revendication 1 ou 2, dans lequel le mécanisme (130) de réunion de jeunes plants est placé sur le lieu géométrique le long duquel se déplacent les moyens supérieur et inférieur de saisie de jeunes plants.

4. Appareil pour greffer des jeunes plants selon l'une quelconque des revendications 2 ou 3, dans lequel chacun du moyen (11) de transport de jeunes plants sous forme de scions, du moyen (12) de transport de jeunes plants sous forme de souches et du moyen (13) de transport de jeunes plants greffés est pourvu d'un moyen (32) servant à les élever et les abaisser séparément.

5. Appareil pour greffer des jeunes plants selon la revendication 4, dans lequel chacun du moyen (11) de transport de jeunes plants sous forme de scions et du moyen (12) de transport de jeunes plants sous forme de souches est pourvu d'un capteur destiné à détecter la hauteur des jeunes plants sous forme de scions et de souches transportés par les moyens de transport, chacun des moyens (32) disposés sur le moyen (11) de transport de jeunes plants sous forme de scions et le moyen (12) de transport de jeunes plants sous forme de souches est agencé pour les élever et les abaisser automatiquement sur la base du résultat détecté par les capteurs.

6. Appareil pour greffer des jeunes plants selon l'une quelconque des revendications 1 à 5, dans lequel l'appareil comprend ,en outre une plaque de pression servant, pendant la libération, à aider à la libération de la saisie des parties supérieures des jeunes plants sous forme de souches saisis par le moyen supérieur de saisie de jeunes plants.

7. Appareil pour greffer des jeunes plants selon l'une quelconque des revendications 1 à 6, dans lequel l'appareil comprend en outre un capteur servant, pendant la libération, à détecter la libération de la saisie des parties supérieures des jeunes plants sous forme de souches saisis par le moyen supérieur de saisie de jeunes plants, et dans lequel l'appareil est agencé pour s'arrêter lorsque la libération échoue.

8. Appareil pour greffer des jeunes plants selon l'une quelconque des revendications 1 à 7, dans lequel chacun du moyen (11) de transport de jeunes plants sous forme de scions et du moyen (12) de transport de jeunes plants sous forme de souches est pourvu d'un moyen (90) de réglage de posture de jeunes plants apte à maintenir le jeune plant sensiblement verticalement pendant la greffe du jeune plant par les moyens supérieur et inférieur de saisie.

9. Appareil pour greffer des jeunes plants selon l'une quelconque des revendications 1 à 8, dans lequel le mécanisme (110) de coupe de jeunes plants comprend des mains (117) de saisie de jeunes plants destinées à empêcher que le jeune plant ne bouge pendant la coupe.

10. Appareil pour greffer des jeunes plants selon l'une quelconque des revendications 1 à 9, dans lequel le mécanisme (110) de coupe de jeunes plants comprend des buses (120) servant à injecter un fluide en direction de lames de coupe.

11. Appareil pour greffer des jeunes plants selon l'une quelconque des revendications 1 à 10, dans lequel le mécanisme (130) de réunion de jeunes plants est agencé pour réunir la partie supérieure du jeune plant sous forme de scion et la partie inférieure du jeune plant sous forme de souche à l'aide d'une attache.

12. Appareil pour greffer des jeunes plants selon la revendication 11, dans lequel le mécanisme (130) de réunion de jeunes plants comprend un élément (151) d'appui de jeunes plants destiné à empêcher que le jeune plant ne bouge pendant la réunion des jeunes plants à l'aide de l'attache.

13. Appareil pour greffer des jeunes plants selon la revendication 11 ou 12, dans lequel le mécanisme (130) de réunion de jeunes plants comprend en outre un élément (150) de support d'attache servant à supporter l'extrémité de tête de l'attache avant la réunion des jeunes plants par l'attache.
